# EUROPEAN PATENT SPECIFICATION

(11) **EP 3 688 051 B1**
(45) Date of publication and mention of the grant of the patent: **07.06.2023**
(21) Application number: 18773195.5
(22) Date of filing: 26.09.2018
(51) Int. Cl.: C08G 18/08, C08G 18/38, C08G 18/48, C08G 18/62, C09D 175/04, C09D 175/06, C09D 175/08, C08G 18/42, C08G 18/44, C08G 18/66, C08G 18/65, C08G 18/78, C08G 18/72, C09D 5/20, B05D 7/00, C08G 18/79, B05D 1/36, C09D 5/00, C09D 7/40

(54) **A COATING SYSTEM**
BESCHICHTUNGSZUSAMMENSETZUNG UND BESCHICHTUNGSSYSTEM DAMIT
COMPOSITION DE REVÊTEMENT ET SYSTÈME DE REVÊTEMENT LA COMPRENANT

(30) Priority: 30.09.2017 CN 201710914082; 08.12.2017 EP 17206125
(43) Date of publication of application: 05.08.2020
(73) Proprietor: Covestro Intellectual Property GmbH & Co. KG, 51373 Leverkusen (DE)
(72) Inventor: QIU, Xueke, SuZhou City JiangSu Province 215004 (CN); ZHU, Chuhua, Shanghai 201906 (CN); ZHANG, Zhihan, Shanghai 201203 (CN); LI, Jinqi, Shanghai 201210 (CN); ZHU, Deyong, Shanghai 200237 (CN); FU, Qiang, Shanghai 201108 (CN); PANG, Bo, Shanghai 200441 (CN)
(74) Representative: Levpat
(86) International application number: PCT/EP2018/076052
(87) International publication number: WO 2019/063583

(56) References cited:
- EP-A1- 1 552 961
- EP-A1- 3 110 869
- JP-A- 2014 129 463
- US-A1- 2016 160 356

## Description

### Technical field

The present invention relates to a peelable coating system, a coating method for applying the coating system, and use thereof, as well as a product coated with the coating system.

### Background arts

There is a need in auto market for coloring the appearance of an automobile or painting a personalized pattern onto an automobile. If a colored paint is spray coated directly onto a surface of the original paint on an automobile, the original paint will be damaged.

In order to provide multi-times of coloring or spraying of patterns without damaging the original paint of the automobile, current method commonly used comprises attaching to the automobile surface a layer of colored plastic film cut into various shapes and patterns. However, since the plastic film is planar, while the automobile has a three-dimensional structure, glue and pulling force may be needed when attaching the plastic film, to make the plastic film fitted on the automobile surface. As the plastic film itself has a shrinkage tendency, debonding and upwarping of the plastic film may occur at the edge of the automobile body, damaging the appearance of the automobile surface. In addition, after a few weeks or months, it will be difficult to peel the plastic film from the automobile surface; and even if the plastic film is peeled, residual glue on the automobile surface will be hard to be removed.

Under such circumstances, efforts are made in the industry to find a peelable coating that can be used to replace the plastic film.

US 6458441 B1 discloses a single-layer peelable coating material consisting of a solvent-free aqueous anionic polyurethane-polyurea dispersion. The coating formed from the peelable coating material has the advantages of good ductility, and high tensile strength, is easy to peel off, and can be fitted on any cambered surface. Meanwhile, the coating also has the disadvantage of poor adhesion on the surface of products, and is easy to fall off.

In order to solve the problem of easily falling off of the peelable coating, WO2016061058A1 discloses a multilayer peelable coating system, comprising a primer layer having a certain tensile strength and flexibility, and a cover layer on the surface of the primer layer formed from a UV system containing polyurethane. However, the drying of the UV system requires curing, which may cause uneven curing on substrates having a three-dimensional structure, resulting in a coating with a poor resistance to aging, and easy to fall off or be pulverized. Thus, the UV system is not applicable to substrates having a three-dimensional structure, such as automobile surfaces.

US2014087070A1 discloses a multilayer peelable coating system comprising a primer layer formed of a heat activated adhesive, and a cover layer on the surface of the primer layer formed from an aqueous polymer system. Since the activation temperature required for the heat activated adhesive greatly exceeds the operation temperature of the automobile industry, the above multilayer peelable coating system is not suitable for use in the automobile industry.

US2012276381A1 discloses a multilayer peelable coating system comprising a primer layer formed of an acrylic resin system, and a cover layer on the surface of the primer layer formed from an aqueous polyurethane system. However, the cover layer formed from the aqueous polyurethane system has low hardness, and thus cannot meet the polishability requirement on automobile coatings.

Therefore, it is desirable to develop a peelable coating system having good water resistance, polishability and aging resistance that is suitable for substrates of various materials and shapes.

### Summary of the Invention

It is an object of the present invention to provide a peelable coating system with good water resistance, polishability and aging resistance, a coating method for applying the coating system, and use thereof, as well as a product coated with the coating system.

The peelable coating system according to the present invention comprises:
a first composition comprising an aqueous polymer dispersion or a solvent-based polymer, the first composition being used to form a first coating; and
a second composition that is a coating composition, the second composition being used to form a second coating;
wherein, said coating composition, comprising:
a compound containing an isocyanate-reactive group, wherein the isocyanate-reactive group functionality of the compound containing an isocyanate-reactive group is not less than 2, the compound containing an isocyanate-reactive group comprising an amino-containing compound, the amino-containing compound is a sterically hindered aliphatic secondary diamine having a structure of formula I: 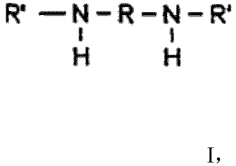
wherein R is a (cyclo)alkylene group having 2 to 16 carbon atoms, and preferably a (cyclo)alkylene group with 1 to 3 carbon atoms being substituted by an etheroxy group or a tertiary amino group; and R' is an isocyanate non-reactive organic group, preferably one or more of the following: diisopropylmethyl and t-butyl;
a polyisocyanate having an isocyanate group functionality of not less than 2.8, wherein the equivalence ratio of the isocyanate group to the isocyanate-reactive group is from 0.5: 1 to 10: 1; and
an organic solvent.

According to an aspect of the present invention, there is provided a coating method for applying the coating system according to the present invention, comprising the steps of:
applying the first composition to a surface of a substrate to form the first coating; and
applying the second composition to a surface of the first coating to form the second coating;
wherein the first coating and the second coating form a peelable coating, and the bonding strength between the first coating and the second coating is greater than the bonding strength between the first coating and the surface of the substrate.

According to another aspect of the present invention, there is provided use of the coating system according to the present invention in the manufacturing of a product.

According to a yet another aspect of the present invention, there is provided a product, comprising a substrate and a coating formed by applying the coating system according to the present invention onto the substrate.

The coating system of the present invention is simple in applying and suitable for substrates of various materials and shapes, and the peelable coating formed therefrom has a good initial peelability.

The isocyanate group functionality of the polyisocyanate in the second composition of the coating system according to the present invention is not less than 2.8, and the compound containing an isocyanate-reactive group is preferably a sterically hindered secondary diamine. The peelable coating formed from the coating system according to the present invention has good water resistance, polishability and aging resistance. After several years of use, the peelable coating can still be fitted on the surface of the substrate, and is easy to peel off. The sterically hindered secondary diamine in the second composition can also enhance the gloss and fullness of the peelable coating.

### Detailed Description of the Invention

The present invention provides a peelable coating system, comprising:
a first composition comprising an aqueous polymer dispersion or a solvent-based polymer, the first composition being used to form a first coating; and
a second composition that is a coating composition, the second composition being used to form a second coating;
wherein, said coating composition, comprising:
a compound containing an isocyanate-reactive group, wherein the isocyanate-reactive group functionality of the compound containing an isocyanate-reactive group is not less than 2, the compound containing an isocyanate-reactive group comprising an amino-containing compound, the amino-containing compound is a sterically hindered aliphatic secondary diamine having a structure of formula I: 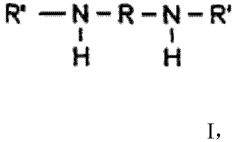
wherein R is a (cyclo)alkylene group having 2 to 16 carbon atoms, and preferably a (cyclo)alkylene group with 1 to 3 carbon atoms being substituted by an etheroxy group or a tertiary amino group; and R' is an isocyanate non-reactive organic group, preferably one or more of the following: diisopropylmethyl and t-butyl;
a polyisocyanate having an isocyanate group functionality of not less than 2.8, wherein the equivalence ratio of the isocyanate group to the isocyanate-reactive group is from 0.5: 1 to 10: 1; and
an organic solvent. The present invention also provides a coating method for applying the coating system, and use thereof, as well as a product coated with the coating system.

### Coating composition

### Compound containing an isocyanate-reactive group

Preferably, the compound containing an isocyanate-reactive group has an isocyanate-reactive group functionality that is not less than 2, more preferably not less than 2 and not more than 6.5, and most preferably 2.

The compound containing an isocyanate-reactive group can further comprises at least one hydroxyl-containing compound.

The hydroxyl-containing compound can be one or more of the following: polyester polyols, polyacrylic polyols, polyether polyols and polycarbonate polyols.

The amino-containing compound is preferably a sterically hindered aliphatic secondary diamine.

The sterically hindered aliphatic secondary diamine is preferably of the formula I: 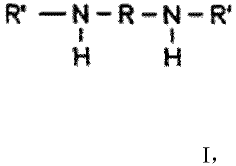
wherein R can be a (cyclo)alkylene group having 2 to 16 carbon atoms; R' can be an isocyanate non-reactive organic group.
R' is preferably one or more of the following: diisopropylmethyl and t-butyl.
R is preferably a (cyclo)alkylene group with 1 to 3 carbon atoms being substituted by an etheroxy group or a tertiary amino group.

The sterically hindered aliphatic secondary diamine is most preferably a polyaspartic ester.

The polyaspartic ester is preferably of the formula II: 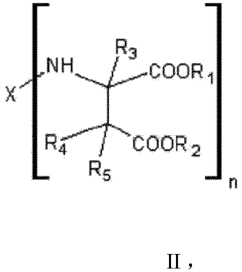
wherein X can be an n-valent organic group obtained by removing an amino group from a primary polyamine or a polyether polyamine;
R₁ and R₂ can be an isocyanate non-reactive organic group, and can be the same or different; R₃, R₄ and R₅ can be hydrogen or an isocyanate non-reactive organic group, and can be the same or different;
n can be no less than 2.
X is preferably a divalent hydrocarbon group obtained by removing an amino group from a primary polyamine or a polyether polyamine, and most preferably a divalent hydrocarbon group obtained by removing an amino group from the primary polyamine.
R₁ and R₂ are each independently preferably methyl, ethyl or n-butyl.
R₃, R₄ and R₅ are each independently hydrogen.
n is preferably from 2 to 4, and most preferably 2.

As used herein, the isocyanate non-reactive organic group refers to an organic group that is inert to the isocyanate group at a temperature of 150 °C or lower.

The polyaspartic ester is most preferably one or more of the following: DesmophenNH1420, Desmophen1520, Desmophen 1220, Desmophen2872, Desmophen2850, Desmophen1422 and Desmophen1521, available from Covestro Polymers (China) Co., Ltd..

The polyaspartic ester can be prepared by the reaction a primary polyamine or a polyether polyamine with a maleate or a fumarate in a known manner. The reaction can be carried out in the absence of a solvent or in the presence of a suitable solvent. Preferred solvent is those that do not react with isocyanates, and, for example, can be one or more selected from the group consisting of: alcohols, ethers, acetates and ketones. The alcohol can be methanol, ethanol, butyl glycol or propanol. The acetate can be n-butyl acetate. The ketone can be methyl ethyl ketone.

The primary polyamine or polyether polyamine can be represented by the general formula X-(NH₂)ₙ, wherein X can be an n-valent organic group obtained by removing the amino group from the primary polyamine or polyether polyamine, preferably a divalent hydrocarbon group obtained by removing the amino group from the primary polyamine or the polyether polyamine, and most preferably a divalent hydrocarbon group obtained by removing the amino group from the primary polyamine.

The primary polyamine is preferably one or more of the following: ethylenediamine, 1,2-diaminopropane, 1,4-diaminobutane, 1,3-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminodecane, 1,12-diaminododecane, 1,3-cyclohexanediamine and 1,4-cyclohexanediamine, amino-3,3,5-trimethyl-5-aminomethylcyclohexane, 2,4-hexahydrotoluenediamine, 2,6-hexahydrotoluenediamine, 2,4'-diamino-dicyclohexylmethane, 4,4'-diamino-dicyclohexylmethane, 3,3'-dialkyl-4,4'-diaminodicyclohexylmethane, 2,4,4'-triamino-5-methyldicyclohexylmethane, 2-methyl-1,5-pentanediamine, 1,3-xylylenediamine and 1,4-xylylenediamine.

The primary polyamine is most preferably one or more of the following: amino-3,3,5-trimethyl-5-aminomethylcyclohexane, 2,4'-diamino-dicyclohexylmethane, 3,3'-dialkyl-4,4'-diaminodicyclohexylmethane, 4,4'-diamino-dicyclohexylmethane and 2-methyl-1,5-pentanediamine.

The polyether polyamine preferably has a number average molecular weight of 148-600, and most preferably has a primary amino group bonded to an aliphatic group.

The maleate or fumarate can be represented by the general formula R₁OOC-CR₃=CR₄-COOR₂, wherein R₁ and R₂ can be an isocyanate non-reactive organic group, can be the same or different, and can be each independently preferably methyl, ethyl or n-butyl; R₃, R₄ and R₅ can be hydrogen or an isocyanate non-reactive organic group, can be the same or different, and can be each independently preferably hydrogen; n can be not less than 2, preferably from 2 to 4, and most preferably 2.

The maleate or fumarate is preferably those substituted by one or more groups of the following: dimethyl ester, diethyl ester, dibutyl ester, such as di-n-butyl ester, di-sec-butyl ester or di-tert-butyl ester, dipentyl ester, di-2-ethylhexyl ester, substituted at the 2-position by methyl and substituted at the 3-position by methyl.

The maleate is further preferably one or more of the following: dimethyl maleate, diethyl maleate and dibutyl maleate, and most preferably diethyl maleate.

### Polyisocyanate

The isocyanate groups of the polyisocyanate of the present invention comprise free and/or potentially free isocyanate groups.

The potentially free isocyanate group can be released by methods well known to those skilled in the art, such as heating.

The polyisocyanate is preferably a liquid at room temperature or can be converted to liquid state by adding an organic solvent.

The polyisocyanate can comprise a blocked isocyanate group. The isocyanate group is blocked by reaction with a low molecular weight compound containing active hydrogen. The low molecular weight compound containing active hydrogen can be an aliphatic alcohol, alicyclic alcohol, dialkylamino alcohol, oxime, lactam, imide, hydroxyalkyl ester, malonate or acetoacetate.

The polyisocyanate can be a polyisocyanate having a hydrophilic group.

The isocyanate group functionality of the polyisocyanate is preferably not less than 2.8 and not more than 10, more preferably not less than 2.8 and not more than 6.

The polyisocyanate can be one or more of the following: aliphatic polyisocyanates, alicyclic polyisocyanates, araliphatic polyisocyanates and aromatic polyisocyanates, and most preferably aliphatic polyisocyanates and/or alicyclic polyisocyanates.

The aliphatic polyisocyanate is preferably hexamethylene polyisocyanate.

The alicyclic polyisocyanate is preferably isophorone polyisocyanate.

In the case where the polyisocyanate is a mixture of polyisocyanates, the isocyanate group functionality of the polyisocyanate is the average isocyanate group functionality of the plurality of polyisocyanates.

The polyisocyanate can be a prepolymer or adduct of a diisocyanate, such as a trimer of diisocyanate. The polyisocyanate can also be isocyanurates, polyisocyanates containing biuret groups, polyisocyanates containing urethane groups, polyisocyanates containing allophanate groups, polyisocyanates containing isocyanurate and allophanate groups, polyisocyanates containing carbodiimide groups, and polyisocyanates containing ureide groups.

### Isocyanate having an isocyanate group functionality of less than 2.8

The coating composition can further comprise an isocyanate having an isocyanate group functionality of less than 2.8, and the average isocyanate group functionality of the isocyanate having an isocyanate group functionality of less than 2.8 and the polyisocyanate is not less than 2.8, preferably not less than 2.8 and not more than 10, and most preferably not less than 2.8 and not more than 6.

The isocyanate having an isocyanate group functionality of less than 2.8 can be one or more selected from the group consisting of: hexamethylene polyisocyanate and hexamethylene diisocyanate elastomeric prepolymer.

The isocyanate having an isocyanate group functionality of less than 2.8 is preferably an isocyanate having an isocyanate group functionality of 2.

The isocyanate group having an isocyanate group functionality of 2 can be one or more selected from the group consisting of: aliphatic diisocyanates, alicyclic diisocyanates, araliphatic diisocyanates and aromatic diisocyanates, and most preferably aliphatic diisocyanates and/or alicyclic diisocyanates.

The aliphatic diisocyanate can be one or more of the following: hexamethylene diisocyanate (HDI), 2,2-dimethylpentane diisocyanate, 2,2,4-trimethylhexane diisocyanate, butene diisocyanate, 1,3-butadiene-1,4-diisocyanate, 2,4,4-trimethyl-1,6-hexamethylene diisocyanate, bis(isocyanatoethyl)carbonate, bis(isocyanatoethyl) ether, and lysine diisocyanatomethyl ester, and most preferably hexamethylene diisocyanate.

The alicyclic diisocyanate can be one or more of the following: isophorone diisocyanate (IPDI), isomeric bis(4,4'-isocyanatocyclohexyl)methane or a mixture of its isomers in any content, 1,4-cyclohexylidene diisocyanate, 1,3-bis(isocyanatomethyl)benzene (XDI), 1,3- and/or 1,4-bis(2-isocyanatopropan-2-yl)benzene (TMXDI), norbornane diisocyanate (NBDI), hydrogenated-xylylene diisocyanate (H₆XDI), 1,4-cyclohexylene diisocyanate (H₆PPDI), 1,5-pentamethylene diisocyanate (PDI) and dicyclohexylmethane diisocyanate, and most preferably isophorone diisocyanate.

The isocyanate having an isocyanate group functionality of 2 can also be a sterically hindered diisocyanate, such as 1,1,6,6-tetramethyl-hexamethylene diisocyanate, 1,5-dibutyl-pentamethylene diisocyanate, p-tetramethylxylylene diisocyanate or m-tetramethylxylylene diisocyanate.

The isocyanate groups of the isocyanate having an isocyanate group functionality of less than 2.8 according to the present invention comprise free and/or potentially free isocyanate groups.

The potentially free isocyanate groups can be released by methods well known to those skilled in the art, such as heating.

The isocyanate having an isocyanate group functionality of less than 2.8 is preferably a liquid at room temperature or can be converted to liquid state by adding an organic solvent.

The isocyanate having an isocyanate group functionality of less than 2.8 can comprise a blocked isocyanate group. The isocyanate group is blocked by reaction with a low molecular weight compound containing active hydrogen. The low molecular weight compound containing active hydrogen can be an aliphatic alcohol, alicyclic alcohol, dialkylamino alcohol, oxime, lactam, imide, hydroxyalkyl ester, malonate or acetoacetate.

The isocyanate having an isocyanate group functionality of less than 2.8 can be an isocyanate having a hydrophilic group.

The average isocyanate group functionality according to the present invention can be calculated as follows: 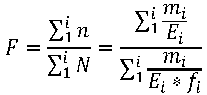
n: the amount in molar of isocyanate groups of each polyisocyanate or the amount in molar of isocyanate groups of each isocyanate having an isocyanate group functionality of less than 2.8;
N: the amount in molar of each polyisocyanate or the amount in molar of each isocyanate having an isocyanate group functionality of less than 2.8;
m: the mass of the polyisocyanate or the mass of the isocyanate having an isocyanate group functionality of less than 2.8 (unit: g);
E: the equivalent weight of the polyisocyanate or the equivalent weight of the isocyanate having an isocyanate group functionality of less than 2.8 (unit: g/mol);
f: the isocyanate group functionality of the polyisocyanate or the isocyanate group functionality of the isocyanate having an isocyanate group functionality of less than 2.8; and
F: the average isocyanate group functionality.

In the cases where the coating composition further comprises an isocyanate having an isocyanate group functionality of less than 2.8, the equivalence ratio of the isocyanate group to the isocyanate-reactive group is from 0.5: 1 to 10: 1, in which the isocyanate group refers to the sum of the isocyanate group of the polyisocyanate and the isocyanate group of the isocyanate having an isocyanate group functionality of less than 2.8.

### Organic solvent

The organic solvent can be one or more selected from the group consisting of: alcohols, ethers, acetates and ketones.

The alcohol can be methanol, ethanol, butyl glycol or propanol.

The acetate can be n-butyl acetate.

The ketone can be methyl ethyl ketone.

The amount of the organic solvent can be any amount familiar to those skilled in the art that is suitable to be added.

### Additive

The coating composition can further comprise an additive. The additive can be one or more selected from the group consisting of: pigments, such as organic pigments, inorganic pigments, metallic pigments or pearlescent pigments, wetting agents, matting agents, defoamers, film formers, thickeners, elastomers, catalysts, UV absorbers, and other additives familiar to those skilled in the art that can be added to the coating composition.

The amount of the additive can be any amount familiar to those skilled in the art that is suitable to be added.

### Substrate

The substrate can be artificial stone, wood, artificial wood, marble, terrazzo, ceramic, linoleum, metal, plastic, rubber, concrete, composite sheet, paper, leather or glass, and is preferably metal or glass.

The plastic is preferably a polyethylene resin or a polypropylene resin.

The substrate can be a pre-treated substrate, and the pre-treatment can be sanding or coating.

### Coating system

### The first composition

The aqueous polymer dispersion according to the present invention is obtained by dispersing the polymer in water.

The solvent-based polymer according to the present invention is obtained by dispersing the polymer in an organic solvent.

The aqueous polymer dispersion and/or the solvent-based polymer in the first composition can be those well known to those skilled in the art that can be used to form a peelable coating.

The first composition preferably comprises an aqueous polymer dispersion.

The aqueous polymer dispersion can be one or more of the following: aqueous acrylic emulsions, aqueous polyurethane dispersions, aqueous polyvinyl alcohol dispersions, aqueous polyether dispersions, aqueous polyester dispersions and aqueous dispersions of fatty acid esters.

The solvent-based polymer can be one or more of the following: a styrene-butadiene latex and a polystyrene propionate.

The aqueous polymer dispersion is preferably an aqueous polyurethane dispersion.

As used herein, the polyurethane refers to polyurethane urea and/or polyurethane-polyurea and/or polyurea.

The amount of the aqueous polyurethane dispersion is preferably not less than 50% by weight, and most preferably not less than 85% by weight, based on the amount of the first composition being 100% by weight.

The aqueous polyurethane dispersion preferably has a solid content of 10 to 70% by weight, more preferably 30 to 65% by weight, and most preferably 30 to 50% by weight, relative to 100% by weight of the aqueous polyurethane dispersion.

The aqueous polyurethane dispersion can be those that can optionally form a coating on the surface of the substrate.

The aqueous polyurethane dispersion is further preferably an anionic and/or nonionic aqueous polyurethane dispersion, and most preferably an anionic aqueous polyurethane dispersion.

The anionic aqueous polyurethane dispersion is preferably an aliphatic anionic aqueous polyurethane dispersion.

The first composition can further comprise an additive. The additive can be one or more selected from the group consisting of: pigments, such as organic pigments, inorganic pigments, metallic pigments or pearlescent pigments, wetting agents, matting agents, defoamers, film formers, thickeners, leveling agents, photoaging agents, cosolvents, neutralizing agents and other additives well known to those skilled in the art that can be added to the first composition.

The amount of the additive can be any amount familiar to those skilled in the art that is suitable to be added.

### The third composition

The coating system can further comprise a third composition, which can comprise an aqueous polymer dispersion or a solvent-based polymer. The third composition is different from the first composition, and can be used to form a third coating.

The third composition preferably comprises an aqueous polymer dispersion.

The aqueous polymer dispersion can be one or more of the following: aqueous acrylic emulsions, aqueous polyurethane dispersions, aqueous polyvinyl alcohol dispersions, aqueous polyether dispersions, aqueous polyester dispersions and aqueous dispersions of fatty acid esters.

The solvent-based polymer can be one or more of the following: a styrene-butadiene latex and a polystyrene propionate.

The third composition can further comprise an additive. The additive can be one or more selected from the group consisting of: pigments, such as organic pigments, inorganic pigments, metallic pigments or pearlescent pigments, wetting agents, matting agents, antifoaming agents, film formers, thickeners and other additives well known to those skilled in the art that can be added to the third composition, and is preferably an organic pigment, an inorganic pigment, a metallic pigment or a pearlescent pigment.

The amount of the additive can be any amount familiar to those skilled in the art that can be added.

### Coating method

The substrate can be artificial stone, wood, artificial wood, marble, terrazzo, ceramic, linoleum, metal, plastic, rubber, concrete, composite sheet, paper, leather or glass, and is preferably metal or glass.

The plastic is preferably a polyethylene resin or a polypropylene resin.

The substrate can be a pre-treated substrate, and the pre-treatment can be sanding or coating.

The xenon lamp aging time of the peelable coating can be not less than 200 hours, preferably not less than 500 hours, and most preferably not less than 2000 hours, as determined in accordance with the standard ISO 11341: 2004 (GB/T1865-2009).

### Applying

The applying can be completed by any method well known to those skilled in the art, such as blade coating, brush coating, roller coating, spray coating or curtain coating.

### The first coating

The first coating is preferably peelable, and the thickness of the first coating is preferably 10 µm to 300 µm, and most preferably 20 µm to 80 µm.

The first coating can be a monolayer or multilayer coating. The multilayer first coating can be formed by applying the first composition a plurality of times.

### The second coating

The thickness of the second coating is preferably 10 µm to 300 µm, and most preferably 20 µm to 80 µm.

The second composition is preferably applied after the first coating is dried.

The second composition can be obtained by uniformly mixing the compound containing an isocyanate-reactive group, the polyisocyanate, the organic solvent, optionally the additive, and optionally the isocyanate having an isocyanate group functionality of less than 2.8.

The second composition can also be obtained in the following way: uniformly mixing the compound containing an isocyanate-reactive group, optionally the organic solvent and optionally the additive to obtain a mixture comprising the compound containing an isocyanate-reactive group, uniformly mixing the polyisocyanate, optionally the organic solvent, optionally the additive and optionally the isocyanate having an isocyanate group functionality of less than 2.8 to obtain a mixture comprising isocyanate compounds, and then uniformly mixing the mixture comprising the compound containing an isocyanate-reactive group, the mixture comprising isocyanate compounds, and optionally the organic solvent, in which the organic solvent is added in at least one of the above steps.

The second coating can be a monolayer or multilayer coating. The multilayer second coating can be formed by applying the second composition a plurality of times.

### The third coating

A third composition can be further applied between the first coating and the second coating to form a third coating, and thus the first coating, the second coating and the third coating form a peelable coating. The bonding strength between the first coating, the second coating and the third coating is greater than the bonding strength between the first coating and the surface of the substrate.

In particular, it can be applied by the following steps:
applying the third composition to a surface of the first coating to form the third coating; and
applying the second composition to a surface of the third coating to form the second coating.

The thickness of the third coating is preferably 10 µm to 300 µm, and most preferably 10 µm to 40 µm.

The third coating is preferably used to decorate the substrate.

The third composition is preferably applied after the first coating is dried. The second composition is preferably applied after the third coating is dried.

The third coating can be a monolayer or multilayer coating. The multilayer third coating can be formed by applying the third composition a plurality of times.

The bonding strength between the third coating and the first coating is preferably greater than the bonding strength between the first coating and the surface of the substrate; the bonding strength between the third coating and the second coating is preferably greater than the bonding strength between the first coating and the surface of the substrate.

The first coating can be used as a primer coating, also known as an undercoat layer, so that the peelable coating can be removed from the surface of the substrate, and the surface of the substrate can be previously coated with a coating. The third coating can be a colored paint coating or a heat resistant coating. The second coating can be a protective layer for protecting the first coating and the optional third coating, so that they can be maintained on the surface of the substrate for a long period of time, while still having a good peelability, water resistance and polishability.

### Products

The product can be a window, a mirror, a furniture, a bicycle, an automobile, a road sign, a bridge, a book or a box, and most preferably an automobile.

### Examples

Unless otherwise defined, all technical and scientific terms used herein have the same meaning as commonly understood by those skilled in the art to which this invention pertains. Where the definitions of the terms in this specification contradict the meaning commonly understood by those skilled in the art to which this invention pertains, the definitions provided herein shall prevail.

Unless otherwise stated, all numerical values used in the specification and claims, to define the amount of a component, the reaction condition, and the like, are to be understood as being modified by the term "about". Thus, unless otherwise indicated, all numerical parameters set forth herein are approximate values that can be varied as needed according to the desired properties.

The term "peelable coating composition" is a protective composition be applied on a substrate to form a protective film to protect the surface of the substrate, and the protective film is easily to be stripped off without affecting the surface of the substrate when the protection is finished.

As used herein, the term "and/or" means one or all of the elements mentioned.

As used herein, the terms "comprise/comprising" and "contain/containing" cover the case where only the element(s) mentioned is/are present, and the case where a non-mentioned element other than the element(s) mentioned is also present.

All percentages provided in the present application are expressed in percentage by weight, unless otherwise indicated.

The analyses and measurements of the present invention were carried out at 23 ± 2 °C, unless otherwise indicated.

The determination of the water resistance was conducted in accordance with GB/T1733-1993 as follows: a substrate with a coating was immersed in water for 6 hours, at a temperature of 23 ± 2 °C and a humidity of 50% ± 5%, removed from the water, wiped dry, and then placed at room temperature for 10 minutes; if no blistering or blushing of the coating was observed, the coating was considered to have passed the test for water resistance; or otherwise, if blistering or blushing of the coating was observed, the coating was considered to have failed in the test for water resistance.

The determination of the polishability was conducted as follows: a coating was gently sanded with 2000-grit sandpaper; if the coating did not stick to the sandpaper, and the sanding marks on the coating surface could be removed using a polishing machine, then the coating was considered to have a good polishability, or otherwise the coating was considered to have a poor polishability.

The initial peelability of the coating was determined as follows: if a dry coating could be completely peeled off from the surface of the substrate in the form of a film or a fragmented film, leaving no obvious marks of the coating on the substrate surface, then the coating was considered to have a good peelability, or otherwise the coating was considered to have a poor peelability.

The peelability of the coating after xenon lamp aging: a dried peelable coating was aged with a xenon lamp in accordance with the standard ISO 11341: 2004 (GB/T1865-2009); if the aged coating could be completely peeled off from the surface of the substrate in the form of a film or a fragmented film, leaving no obvious marks of the coating on the substrate surface, then the coating was considered to have a good peelability, or otherwise the coating was considered to have a poor peelability.

The solid content of the aqueous polyurethane dispersion was determined using the HS153 Moisture Analyzer from Mettler Toledo in accordance with DIN-EN ISO 3251.

The hydroxyl content was determined in accordance with ASTM D4274.

The amino content was determined in accordance with AFAM 2011-06054.

The isocyanate group (NCO) content was determined volumetrically in accordance with DIN-EN ISO 11909, and the measured data included the free and potentially free NCO contents.

The isocyanate group functionality was determined by GPC.

### Starting materials and reagents

Bayhydrol UH2342: an aqueous anionic, aliphatic polyurethane dispersion having a solid content of 35% by weight, available from COVESTRO DEUTSCHLAND AG, used as the aqueous polyurethane dispersion in the first composition.

Bayhydrol UH2648/1: a polyester-polycarbonate-based aqueous anionic, aliphatic polyurethane dispersion having a solid content of 35% by weight, available from COVESTRO DEUTSCHLAND AG, used as the aqueous polyurethane dispersion in the first composition.

Bayhydrol UH2557: an aqueous anionic, aliphatic polyurethane dispersion having a solid content of 37% by weight, available from COVESTRO DEUTSCHLAND AG, used as the aqueous polyurethane dispersion in the first composition.

Impranil DLC/F: a polycarbonate-based aqueous anionic, aliphatic polyurethane dispersion having a solid content of 35% by weight, available from COVESTRO DEUTSCHLAND AG, used as the aqueous polyurethane dispersion in the first composition.

Desmophen NH1420: a polyaspartic ester, having an amino group functionality of 2.0 and an amino equivalent weight of 279, available from COVESTRO DEUTSCHLAND AG, used as the compound containing an isocyanate-reactive group in the second composition.

Desmophen NH1520: a polyaspartic ester, having an amino group functionality of 2.0 and an amino equivalent weight of 290, available from COVESTRO DEUTSCHLAND AG, as the compound containing an isocyanate-reactive group in the second composition.

Satelux DA 870BA: a polyacrylic polyol having a hydroxyl group functionality of 6.2, a hydroxyl content of 4.2% by weight and a hydroxyl equivalent weight of 575, available from Allnex Resins (Shanghai) Co., Ltd.

PPG600: a polyether polyol having a hydroxyl group functionality of 2.0 and a hydroxyl content of 6.3% by weight, available from the Collins Reagents, used as the compound containing an isocyanate-reactive group in the second composition.

Desmophen VPLS 2328: a polyester polyol having a hydroxyl group functionality of 2.0 and a hydroxyl content of 8.0% by weight, available from COVESTRO DEUTSCHLAND AG, used as the compound containing an isocyanate-reactive group in the second composition.

Desmophen C1200: a polycarbonate diol having a hydroxyl group functionality of 2 and a hydroxyl content of 1.7% by weight, available from COVESTRO DEUTSCHLAND AG, used as the compound containing an isocyanate-reactive group in the second composition.

Desmodur N3580BA: hexamethylene polyisocyanate having an isocyanate group functionality of 5.5, and an isocyanate group content of 15.4% by weight, available from COVESTRO DEUTSCHLAND AG, used as the polyisocyanate in the second composition.

Desmodur N3790BA: hexamethylene polyisocyanate having an isocyanate group functionality of 3.9 and an isocyanate group content of 17.8% by weight, available from COVESTRO DEUTSCHLAND AG, used as the polyisocyanate in the second composition.

Desmodur N3390BA: hexamethylene polyisocyanate having an isocyanate group functionality of 3.5 and an isocyanate group content of 19.6% by weight, available from COVESTRO DEUTSCHLAND AG, used as the polyisocyanate in the second composition.

Desmodur Z4470BA: isophorone polyisocyanate having an isocyanate group functionality of 3.5 and an isocyanate group content of 11.9% by weight, available from COVESTRO DEUTSCHLAND AG, used as the polyisocyanate in the second composition.

Desmodur N3400: hexamethylene polyisocyanate having an isocyanate group functionality of 2.5 and an isocyanate group content of 21.8% by weight, available from COVESTRO DEUTSCHLAND AG, used as the isocyanate in the second composition having an isocyanate group functionality of less than 2.8.

Desmodur E2863XP: hexamethylene diisocyanate elastomeric prepolymer having an isocyanate group functionality of 2.2 and an isocyanate group content of 11.0% by weight, available from COVESTRO DEUTSCHLAND AG, used as the isocyanate in the second composition having an isocyanate group functionality of less than 2.8.

Butyl acetate: available from Dow Chemical, used as the organic solvent in the second composition.

N-heptanone: available from Dow Chemical, used as the organic solvent in the second composition.

BYK346: a silicone surfactant, wetting agent, available from BYK, used as the additive in the first composition.

BYK3560: a surfactant free of silicone and fluorine, leveling agents, available from BYK, used as the additive in the first composition.

BYK093: a silicone defoamer, defoamer, available from BYK, used as the additive in the first composition.

Tinuvin 5151: bis(1,2,2,6,6-pentamethyl-4-piperidyl)sebacate, photoaging agent, available from BASF, used as the additive in the first composition.

DMEA: 10% aqueous solution of dimethylaminoethanol, neutralizing agent, available from Elementis Specialties, Inc., USA, used as the additive in the first composition.

DPM: dipropylene glycol methyl ether, cosolvent, available from Dow Chemical, used as the additive in the first composition.

Tinuvin 1130: a benzotriazole-based UV absorber, UV absorber, available from BASF, used as the additive in the second composition.

Tinuvin 292: a liquid hindered amine light stabilizer, UV absorber, available from BASF, used as the additive in the second composition.

BYK388: a fluorine-modified polyacrylate solution leveling agent, wetting agent, available from BYK, used as the additive in the second composition.

BYK358: a polyacrylate leveling agent, wetting agent, available from BYK, used as the additive in the second composition.

Impranil HS62: a thermoplastic polyurethane, elastomer, available from COVESTRO DEUTSCHLAND AG, used as the additive in the second composition.

Desmocap 12: a blocked polyurethane, elastomer, available from COVESTRO DEUTSCHLAND AG, used as the additive in the second composition.

TABCO T12: an organotin catalyst, used as the additive in the second composition, available from the Gas Chemical Company.

AK5: an aqueous, single-component coating based on polyurethane and acrylate, available from Liwrea, Italy.

P998-8987: an aqueous background paint, available from PPG, used as the third composition.

C-AM15: a solvent-based background paint, available from Guangzhou Yingze Chemicals, Inc, used as the third composition.

AM5: a solvent-based high-concentration black masterbatch, available from Axalta.

AK100: a two-component solvent-based resin, available from Axalta.

AK260: a solvent-based high-solid content curing agent, available from Axalta.

AB385: a solvent-based thinner, available from Axalta.

Steel plate with electrophoretic primer coating: a steel plate having a length, width and thickness of 30 cm, 20 cm, and 0.1 cm, respectively, available from Guangzhou Hong Hong Trade Co., Ltd..

### Test substrate

A topcoat obtained by mixing 25.3 g of AM5, 40 g of AK100, 21.7 g of AK260 and 13.0 g of AB385 was applied to the steel plate with electrophoretic primer coating using a spray gun (SATA HVLP4000, available from SATA GmbH & Co. KG, Germany) to form a black coating. The resultant was baked at a temperature of 60 °C for 60 minutes, and then maintained at a temperature of 23 ± 2 °C and a humidity of 50% ± 5% for 7 days to provide the test substrate. The thickness of the coating was controlled at 30 µm to 40 µm.

### Preparation of the peelable coating of the inventive Examples 1-15

### Example 1-13 (Coating system without the third composition)

The components of the first composition as shown in Table 1 were added to a container while stirring. The stirring was kept at a rate of 1500 rpm for 20 minutes and then stopped. The resultant was filtered, stored for 24 hours, and then applied to the surface of the test substrate using a spray gun (SATA HVLP4000, available from SATA GmbH & Co. KG, Germany) to form a first coating, which was then baked at a temperature of 60 °C for 20 minutes, or dried at a temperature of 23 ± 2 °C and a humidity of 50% ± 5% to provide a dried first coating having a thickness of 20 µm to 30 µm.

A mixture comprising the compound containing an isocyanate-reactive group and a mixture comprising the isocyanate compounds were obtained, separately, by uniformly mixing the components according to the amounts as shown in Table 2. The mixture comprising the compound containing an isocyanate-reactive group and the mixture comprising the isocyanate compounds were uniformly mixed to provide a second composition. The second composition was applied to the surface of the first coating using a spray gun (SATA HVLP4000, available from SATA GmbH & Co. KG, Germany) to form a second coating, which was then dried at a temperature of 23 ± 2 °C and a humidity of 50% ± 5% for 24 hours to provide a dried second coating having a thickness of 20 m to 30 m. The first coating and the second coating were bonded together, forming a peelable coating.

### Examples 14-15 (Coating system further comprising a third composition)

The components of the first composition as shown in Table 1 were added to a container while stirring. The stirring was kept at a rate of 1500 rpm for 20 minutes and then stopped. The resultant was filtered, stored for 24 hours, and then applied to the surface of the test substrate using a spray gun (SATA HVLP4000, available from SATA GmbH & Co. KG, Germany) to form a first coating, which was then baked at a temperature of 60 °C for 20 minutes, or dried at a temperature of 23 ± 2 °C and a humidity of 50% ± 5% to provide a dried first coating having a thickness of 20 µm to 30 µm.

A third composition as shown in Table 3 was applied to the surface of the first coating using a spray gun (SATA HVLP4000, available from SATA GmbH & Co. KG, Germany) to form a third coating, which was then baked at 60 °C for 20 minutes or dried at a temperature of 23 ± 2 °C and a humidity of 50% ± 5% to provide a dried third coating having a thickness of 20 µm to 30 µm.

A mixture comprising the compound containing an isocyanate-reactive group and a mixture comprising the isocyanate compounds were obtained, separately, by uniformly mixing the components according to the amounts as shown in Table 2. The mixture comprising the compound containing an isocyanate-reactive group and the mixture comprising the isocyanate compounds were uniformly mixed to provide a second composition. The second composition was applied to the surface of the third coating using a spray gun (SATA HVLP4000, available from SATA GmbH & Co. KG, Germany) to form a second coating, which was then dried at a temperature of 23 ± 2 °C and a humidity of 50% ± 5% for 24 hours to provide a dried second coating having a thickness of 20 m to 30 m. The first coating, the third coating and the second coating were bonded together, forming a peelable coating.

### Preparation of the comparative coating of Comparative Example 1-6

### Comparative Examples 1-4

The components of the first composition as shown in Table 1 were added to a container while stirring. The stirring was kept at a rate of 1500 rpm for 20 minutes and then stopped. The resultant was filtered, stored for 24 hours, and then applied to the surface of the test substrate using a spray gun (SATA HVLP4000, available from SATA GmbH & Co. KG, Germany) to form a first coating, which was then baked at a temperature of 60 °C for 20 minutes, or dried at a temperature of 23 ± 2 °C and a humidity of 50% ± 5% to provide a dried first coating having a thickness of 20 µm to 30 µm.

A comparative mixture comprising the compound containing an isocyanate-reactive group and a comparative mixture comprising the isocyanate compounds were obtained, separately, by uniformly mixing the components according to the amounts as shown in Table 2 for comparative second compositions. The comparative mixture comprising the compound containing an isocyanate-reactive group and the comparative mixture comprising the isocyanate compounds were uniformly mixed to provide a comparative second composition. The comparative second composition was applied to the surface of the first coating using a spray gun (SATA HVLP4000, available from SATA GmbH & Co. KG, Germany) to form a comparative second coating, which was then dried at a temperature of 23 ± 2 °C and a humidity of 50% ± 5% for 24 hours to provide a dried comparative second coating having a thickness of 20 m to 30 m. The first coating and the comparative second coating were bonded together, forming a comparative peelable coating.

### Comparative Example 5-6

AKS or the components of the first composition as shown in Table 1 were added to a container while stirring. The stirring was kept at a rate of 1500 rpm for 20 minutes and then stopped. The resultant was filtered, stored for 24 hours, and then applied to the surface of the test substrate using a spray gun (SATA HVLP4000, available from SATA GmbH & Co. KG, Germany) to form a comparative coating, which was then baked at a temperature of 60 °C for 20 minutes, or dried at a temperature of 23 ± 2 °C and a humidity of 50% ± 5% to provide a dried comparative coating having a thickness of 20 µm to 30 µm.

**Table 1 Components and their contents of each first composition (unit: g)**

| | First composition 1 | First composition 2 | First composition 3 |
|---|---|---|---|
| Bayhydrol UH2342 | 75 | 75 | |
| Bayhydrol UH2557 | | | 75 |
| ImpranilDLC/F | 15 | | |
| Bayhydrol UH2648/1 | | 15 | 15 |
| DPM | 6 | 6 | 6 |
| BYK 346 | 0.5 | 0.5 | 0.5 |
| BYK 3560 | 0.5 | 0.5 | 0.5 |
| BYK 093 | 0.5 | 0.5 | 0.5 |
| Tinuin 5151 | 1.0 | 1.0 | 1.0 |
| DMEA | 1.5 | 1.5 | 1.5 |

**Table 2 Components and their contents of the second composition of the Examples and the Comparative Examples (unit: g)**

| Components | The second composition of the inventive Examples | | | | | | | | | | | | | The second composition of the Comparative Examples | | | |
|---|---|---|---|---|---|---|---|---|---|---|---|---|---|---|---|---|---|
| | Second composition 1 | Second composition 2 | Second composition 3 | Second composition 4 | Second composition 5 | Second composition 6 | Second composition 7 | Second composition 8 | Second composition 9 | Second composition 10 | Second composition 11 | Second composition 12 | Second composition 13 | Second composition 14 | Second composition 15 | Second composition 16 | Second composition 17 |
| Mixture comprising the compound containing an isocyanate-reactive group | | | | | | | | | | | | | | Comparative mixture comprising the compound containing an isocyanate-reactive group | | | |
| Desmophen NH 1420 | 45.0 | 45.0 | 45.0 | 45.0 | 45.0 | 45.0 | 45.0 | 45.0 | 45.0 | 45.0 | 45.0 | 45.0 | 45.0 | | 45.0 | 45.0 | 45.0 |
| Desmophen NH1520 | 5.0 | 5.0 | 5.0 | 5.0 | 5.0 | 5.0 | 5.0 | 5.0 | 5.0 | 5.0 | 5.0 | 5.0 | 5.0 | | 5.0 | 5.0 | 5.0 |
| Satelux DA 870BA | | | | | | | | | | | | | | 43.3 | | | |
| PPG600 | | 2.0 | | | | | | | | | | | | | | | |
| Desmophen VPLS 2328 | | | 2.0 | | | | | | | | | | | | | | |
| Desmophen C1200 | | | | 2.0 | | | | | | | | | | | | | |
| Butyl acetate | 28.6 | 28.6 | 28.6 | 28.6 | 28.6 | 28.6 | 28.6 | 28.6 | 28.6 | 28.6 | 28.6 | 28.6 | 28.6 | 19.3 | 28.6 | 28.6 | 28.6 |
| n-heptanone | 20.0 | 18.0 | 18.0 | 18.0 | 18.0 | 18.0 | 20.0 | 20.0 | 20.0 | 20.0 | 20.0 | 20.0 | 20.0 | 10.0 | 20.0 | 20.0 | 20.0 |
| Tinuvin 1130 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Tinuvin 292 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Impranil HS62 | | | | | 2.0 | | | | | | | | | | | | |
| Desmocap 12 | | | | | | 2.0 | | | | | | | | | | | |
| DABCO T12 | | | | | | | | | | | | | | 1.0 | | | |
| BYK 388 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| BYK 358 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |

| Mixture comprising the isocyanate compounds | | | | | | | | | | | | | | Comparative mixture comprising the isocyanate compounds | | | |
|---|---|---|---|---|---|---|---|---|---|---|---|---|---|---|---|---|---|
| Desmodur N3790BA | 21.0 | 43.9 | 44.3 | 42.6 | 42.1 | 42.1 | 421.3 | 210.6 | 21.1 | 17.7 | 14.8 | 11.8 | 8.7 | | 5.7 | 2.6 | |
| Desmodur Z4470BA | 16.4 | | | | | | | | | 16.4 | 16.4 | 16.4 | 16.4 | | 16.4 | 16.4 | 14.8 |
| Desmodur N3580 | | | | | | | | | | | | | | | | | |
| Desmodur N3390BA | | | | | | | | | | | | | | 16.1 | | | |
| Desmodur N3400 | | | | | | | | | | | | | | | | | 18.9 |
| Desmodur E2863XP | 16.4 | | | | | | | | | 19.4 | 22.0 | 24.7 | 27.5 | | 30.2 | 33.0 | 14.8 |
| Butyl acetate | 37.4 | | | | | | | | | | | | | 8.6 | | | 33.7 |
| The average isocyanate group functionality of the isocyanate compounds | | | | | | | | | | | | | | The average isocyanate group functionality of the comparative isocyanate compounds | | | |
| | 3.2 | 3.9 | 3.9 | 3.9 | 3.9 | 3.9 | 3.9 | 3.9 | 3.9 | 3.1 | 3.0 | 2.9 | 2.8 | 3.5 | 2.7 | 2.6 | 2.6 |
| The equivalence ratio of the isocyanate group to the isocyanate-reactive group | | | | | | | | | | | | | | The comparative equivalence ratio of the isocyanate group to the isocyanate reactive group | | | |
| | 1: 1 | 1: 1 | 1: 1 | 1: 1 | 1: 1 | 1: 1 | 10: 1 | 5: 1 | 0.5: 1 | 1: 1 | 1: 1 | 1: 1 | 1: 1 | 1: 1 | 1: 1 | 1: 1 | 1: 1 |

The equivalence ratio of the isocyanate group to the isocyanate-reactive group is calculated as follows, using the second composition 1 as an example:
The amount in molar of the isocyanate group in the second composition 1 is:
The equivalent weight of the isocyanate group of Desmodur N3790BA = 42/(17.8%) = 236,
The equivalent weight of the isocyanate group of Desmodur Z4470BA = 42/(11.9%) = 353,
The equivalent weight of the isocyanate group of Desomur E2863XP = 42/(11%) = 382,
The amount in molar of the isocyanate group in the second composition 1 = 21/236 + 16.4/353 + 16.4/382 = 0.1784;
The amount in molar of the isocyanate-reactive group in the second composition 1 = 45/279 +5/290 = 0.1785;
The equivalence ratio of the isocyanate group to the isocyanate-reactive group of the second composition 1 = 0.1784/0.1785 = 1.

The average isocyanate group functionality is calculated as follows, using the average isocyanate group functionality of the second composition 1 as an example:
The amount in molar of the isocyanate group of Desmodur N3790BA = 21.0/236 = 0.089;
The amount in molar of the isocyanate group of Desmodur Z4470BA = 16.4/353 = 0.046;
The amount in molar of the isocyanate group of Desomur E2863XP = 16.4/382 = 0.043;
The amount in molar of Desmodur N3790BA = 21.0/(236 ^{∗} 3.9) = 0.023;
The amount in molar of Desmodur Z4470BA = 16.4/(353 ^{∗} 3.5) = 0.013;
The amount in molar of Desmodur E2863XP = 16.4/(382 ^{∗} 2.2) = 0.020;
The average isocyanate group functionality of the second composition 1 = (0.089 + 0.046 + 0.043)/(0.023 + 0.013 + 0.02) = 3.2.

The coating systems of the inventive Examples 1-15 and Comparative Examples 1-6 are shown in Table 3.

**Table 3 Coating systems of the inventive Examples 1-15 and Comparative Examples 1-6**

| | First composition | Second composition | Third composition |
|---|---|---|---|
| Ex. 1 | First composition 1 | Second composition 1 | |
| Ex. 2 | First composition 1 | Second composition 2 | |
| Ex. 3 | First composition 1 | Second composition 3 | |
| Ex. 4 | First composition 1 | Second composition 4 | |
| Ex. 5 | First composition 1 | Second composition 5 | |
| Ex. 6 | First composition 1 | Second composition 6 | |
| Ex. 7 | First composition 2 | Second composition 7 | |
| Ex.8 | First composition 2 | Second composition 8 | |
| Ex. 9 | First composition 3 | Second composition 9 | |
| Ex. 10 | First composition 1 | Second composition 10 | |
| Ex. 11 | First composition 1 | Second composition 11 | |
| Ex. 12 | First composition 1 | Second composition 12 | |
| Ex. 13 | First composition 1 | Second composition 13 | |
| Ex. 14 | First composition 1 | Second composition 1 | P998-8987 |
| Ex. 15 | First composition 1 | Second composition 1 | C-AM15 |
| Comp. Ex.1 | First composition 1 | Second composition 14 | |
| Comp. Ex.2 | First composition 1 | Second composition 15 | |
| Comp. Ex.3 | First composition 1 | Second composition 16 | |
| Comp. Ex.4 | First composition 1 | Second composition 17 | |
| Comp. Ex.5 | AK5 | | |
| Comp. Ex.6 | First composition 1 | | |

### Performance test

The test data of the performances of the peelable coatings formed from the coating systems of the inventive Examples 1-15 and the comparative coatings formed from the comparative coating systems of Comparative Examples 1-6 are shown in Table 4.

**Table 4 Comparison of the performances of the peelable coatings formed from the coating systems of the inventive Examples 1-15 and the comparative coatings formed from the comparative coating systems of Comparative Examples 1-6**

| | Water resistance | Polishability | Initial peelabili ty | Peelability after 200 hours of xenon lamp aging | Peelability after 500 hours of xenon lamp aging | Peelability after 2000 hours of xenon lamp aging |
|---|---|---|---|---|---|---|
| Ex. 1 | good | good | good | good | good | good |
| Ex. 2 | good | good | good | good | good | good |
| Ex. 3 | good | good | good | good | good | good |
| Ex. 4 | good | good | good | good | good | good |
| Ex. 5 | good | good | good | good | good | good |
| Ex. 6 | good | good | good | good | good | good |
| Ex. 7 | good | good | good | good | good | good |
| Ex. 8 | good | good | good | good | good | good |
| Ex. 9 | good | good | good | good | good | good |
| Ex. 10 | good | good | good | good | good | good |
| Ex. 11 | good | good | good | good | good | good |
| Ex. 12 | good | good | good | good | good | good |
| Ex. 13 | good | good | good | good | good | good |
| Ex. 14 | good | good | good | good | good | good |
| Ex. 15 | good | good | good | good | good | good |
| Comp. Ex. 1 | good | good | good (fragile) | good (fragile) | good (fragile) | good (fragile) |
| Comp. Ex. 2 | poor (blushing) | good | good | good | good | good |
| Comp. Ex. 3 | poor (blushing) | good | good | good | good | good |
| Comp. Ex. 4 | poor (blushing) | poor (sticky) | good | good | good | good |
| Comp. Ex. 5 | poor (dissolved) | poor (sticky) | good | poor (non-peelable) | poor (non-peelable) | poor (non-peelable) |
| Comp. Ex. 6 | poor (blushing) | poor (sticky) | good | good | poor (non-peelable) | poor (non-peelable) |

As can be seen from Table 4, the peelable coatings formed in Examples 1-15 are excellent in all of the water resistance, polishability, initial peelability, and peelability after 2000 hours of aging. A comparison between Example 1 and Comparative Example 1 shows that coatings obtained by using an amino-containing compound as the compound containing an isocyanate-reactive group show better performances as compared to coatings obtained by using a hydroxyl-containing compound as the compound containing an isocyanate-reactive group. A comparison between Example 1 and Comparative Examples 2, 3 and 4 shows that, as the average isocyanate group functionality of the isocyanate compounds in each comparative second composition of Comparative Examples 2, 3 and 4 is less than 2.8, the comparative peelable coatings formed from the comparative coating systems cannot simultaneously satisfy the requirements on the water resistance, polishability, initial peelability, and peelability after 2000 hours of aging of the coating. The coating systems used in Comparative Example 5 and Comparative Example 6 are both single-layer aqueous peelable paints, from which the comparative coatings formed are relatively poor in all of the water resistance, polishability and peelability after aging, and thus cannot meet the needs of the market.

## Claims

1. A peelable coating system, comprising:
a first composition comprising an aqueous polymer dispersion or a solvent-based polymer, the first composition being used to form a first coating; and
a second composition that is a coating composition, the second composition being used to form a second coating;
wherein, said coating composition, comprising:
a compound containing an isocyanate-reactive group, wherein the isocyanate-reactive group functionality of the compound containing an isocyanate-reactive group is not less than 2, the compound containing an isocyanate-reactive group comprising an amino-containing compound, the amino-containing compound is a sterically hindered aliphatic secondary diamine having a structure of formula I: 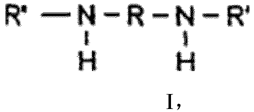
wherein R is a (cyclo)alkylene group having 2 to 16 carbon atoms, and preferably a (cyclo)alkylene group with 1 to 3 carbon atoms being substituted by an etheroxy group or a tertiary amino group; and R' is an isocyanate non-reactive organic group, preferably one or more of the following: diisopropylmethyl and t-butyl;
a polyisocyanate having an average isocyanate group functionality of not less than 2.8, wherein in the case polyisocyanate is a mixture of polyisocyanates, the isocyanate group functionality of the polyisocyanate is the average isocyanate group functionality of the plurality of polyisocyanates,
wherein the equivalence ratio of the isocyanate group to the isocyanate-reactive group is from 0.5: 1 to 10: 1; and
an organic solvent.

2. The coating system according to claim 1, further comprising a third composition comprising an aqueous polymer dispersion or a solvent-based polymer, the third composition being used to form a third coating, wherein the third composition is different from the first composition.

3. The coating system according to claim 1, **characterized in that**, the sterically hindered aliphatic secondary diamine having the structure of formula I is a polyaspartic ester, and preferably a polyaspartic ester having a structure of formula II: 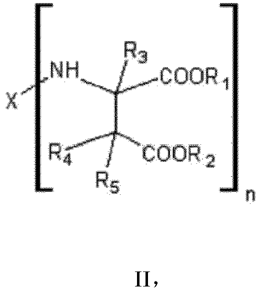
wherein X is an n-valent organic group obtained by removing an amino group from a primary polyamine or a polyether polyamine, and is preferably a divalent hydrocarbon group obtained by removing an amino group from a primary polyamine or a polyether polyamine;
R₁ and R₂ are the same or different isocyanate non-reactive organic groups, and are each independently preferably methyl, ethyl or n-butyl;
R₃, R₄ and R₅ are the same or different hydrogen or isocyanate non-reactive organic groups, and are each independently preferably hydrogen;
n is not less than 2, preferably from 2 to 4, and most preferably 2.

4. The coating system according to claim 1, **characterized in that**, the polyisocyanate has an average isocyanate group functionality of not less than 2.8 and not more than 10, and most preferably not less than 2.8 and not more than 6.

5. The coating system according to claim 1, further comprising an isocyanate having an isocyanate group functionality of less than 2.8, with the average isocyanate group functionality of the isocyanate and the polyisocyanate being not less than 2.8.

6. A coating method for applying the coating system according to any one of claims 1 to 5, comprising the steps of:
applying the first composition to a surface of a substrate to form the first coating; and
applying the second composition to a surface of the first coating to form the second coating;
wherein the first coating and the second coating form a peelable coating, and the bonding strength between the first coating and the second coating is greater than the bonding strength between the first coating and the surface of the substrate.

7. The coating method according to claim 6, **characterized in that**, a third composition is further applied between the first coating and the second coating to form the third coating, wherein the first coating, the second coating and the third coating form a peelable coating, and the bonding strength between the first coating, the second coating and the third coating is greater than the bonding strength between the first coating and the surface of the substrate.

8. The coating method according to claim 6 or 7, **characterized in that**, the substrate is artificial stone, wood, artificial wood, marble, terrazzo, ceramic, linoleum, metal, plastic, rubber, concrete, composite sheet, paper, leather or glass, and is preferably metal or glass.

9. The coating method according to claim 8, **characterized in that**, the substrate is a pre-treated substrate, wherein the pre-treatment is preferably sanding or coating.

10. The coating method according to claim 6 or 7, **characterized in that**, the xenon lamp aging time of the peelable coating is not less than 200 hours, preferably not less than 500 hours, and most preferably not less than 2000 hours, as determined in accordance with the standard ISO 11341: 2004 (GB/T1865-2009).

11. Use of the coating system according to any one of claims 1 to 5 in the manufacturing of a product.

12. A product, comprising a substrate and a coating formed by applying a coating system according to any one of claims 1 to 5 onto the substrate.

13. The product according to claim 12, **characterized in that**, the product is a window, a mirror, a furniture, a bicycle, an automobile, a road sign, a bridge, a book or a box, and is preferably an automobile.

## Patentansprüche

1. Abziehbares Beschichtungssystem, umfassend:
eine erste Zusammensetzung, umfassend eine wässrige Polymerdispersion oder ein lösungsmittelbasiertes Polymer, wobei die erste Zusammensetzung zur Bildung einer ersten Beschichtung verwendet wird; und
eine zweite Zusammensetzung, bei der es sich um eine Beschichtungszusammensetzung handelt, wobei die zweite Zusammensetzung zur Bildung einer zweiten Beschichtung verwendet wird;
wobei die Beschichtungszusammensetzung Folgendes umfasst:
eine Verbindung mit einer isocyanatreaktiven Gruppe, wobei die Verbindung mit einer isocyanatreaktiven Gruppe eine Funktionalität hinsichtlich isocyanatreaktiven Gruppen von nicht weniger als 2 aufweist, wobei die Verbindung mit einer isocyanatreaktiven Gruppe eine aminogruppenhaltige Verbindung umfasst und es sich bei der aminogruppenhaltigen Verbindung um ein sterisch gehindertes aliphatisches sekundäres Diamin mit einer Struktur der Formel I handelt: 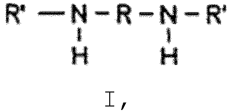
wobei R für eine (Cyclo)alkylengruppe mit 2 bis 16 Kohlenstoffatomen und vorzugsweise eine (Cyclo)-alkylengruppe mit 1 bis 3 Kohlenstoffatomen, die durch eine Etheroxygruppe oder eine tertiäre Aminogruppe substituiert ist, steht und R' für eine nicht isocyanatreaktive organische Gruppe steht, vorzugsweise eine oder mehrere der folgenden: Diisopropylmethyl und t-Butyl;
ein Polyisocyanat mit einer durchschnittlichen Isocyanatgruppenfunktionalität von nicht weniger als 2,8, wobei in dem Fall, dass es sich bei dem Polyisocyanat um ein Gemisch von Polyisocyanat handelt, die Isocyanatgruppenfunktionalität des Polyisocyanats die durchschnittliche Isocyanatgruppenfunktionalität der mehreren Polyisocyanate ist,
wobei das Äquivalentverhältnis von Isocyanatgruppe zu isocyanatreaktiver Gruppe 0,5:1 bis 10:1 beträgt; und
ein organisches Lösungsmittel.

2. Beschichtungssystem nach Anspruch 1, ferner umfassend eine dritte Zusammensetzung, umfassend eine wässrige Polymerdispersion oder ein lösungsmittelbasiertes Polymer, wobei die dritte Zusammensetzung zur Bildung einer dritten Beschichtung verwendet wird, wobei die dritte Zusammensetzung von der ersten Zusammensetzung verschieden ist.

3. Beschichtungssystem nach Anspruch 1, **dadurch gekennzeichnet, dass** es sich bei dem sterisch gehinderten aliphatischen sekundären Diamin mit der Struktur der Formel I um einen Polyasparaginsäureester und vorzugsweise um einen Polyasparaginsäureester mit einer Struktur der Formel II handelt: 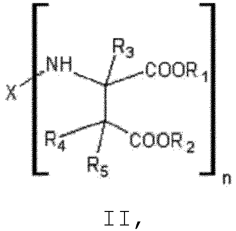
wobei X für eine durch Entfernung einer Aminogruppe von einem primären Polyamin oder einem Polyetherpolyamin erhaltene n-wertige organische Gruppe steht und vorzugsweise für eine durch Entfernung einer Aminogruppe von einem primären Polyamin oder einem Polyetherpolyamin erhaltene zweiwertige Kohlenwasserstoffgruppe steht;
R₁ und R₂ für gleiche oder verschiedene nicht isocyanatreaktive organische Gruppen stehen und vorzugsweise jeweils unabhängig für Methyl, Ethyl oder n-Butyl stehen;
R₃, R₄ und R₅ für gleiche oder verschiedene Wasserstoffgruppen oder nicht isocyanatreaktive organische Gruppen stehen und vorzugsweise jeweils unabhängig für Wasserstoff stehen;
n für nicht weniger als 2, vorzugsweise 2 bis 4 und ganz besonders bevorzugt 2 steht.

4. Beschichtungssystem nach Anspruch 1, **dadurch gekennzeichnet, dass** das Polyisocyanat eine durchschnittliche Isocyanatgruppenfunktionalität von nicht weniger als 2,8 und nicht mehr als 10 und ganz besonders bevorzugt nicht weniger als 2,8 und nicht mehr als 6 aufweist.

5. Beschichtungssystem nach Anspruch 1, ferner umfassend ein Isocyanat mit einer Isocyanatgruppenfunktionalität von weniger als 2,8, wobei die durchschnittliche Isocyanatgruppenfunktionalität des Isocyanats und des Polyisocyanats nicht weniger als 2,8 beträgt.

6. Beschichtungsverfahren zum Aufbringen des Beschichtungssystems nach einem der Ansprüche 1 bis 5, das folgende Schritte umfasst:
Aufbringen der ersten Zusammensetzung auf eine Oberfläche eines Substrats zur Bildung der ersten Beschichtung und
Aufbringen der zweiten Zusammensetzung auf eine Oberfläche der ersten Beschichtung zur Bildung der zweiten Beschichtung;
wobei die erste Beschichtung und die zweite Beschichtung eine abziehbare Beschichtung bilden und die Haftfestigkeit zwischen der ersten Beschichtung und der zweiten Beschichtung größer ist als die Haftfestigkeit zwischen der ersten Beschichtung und der Oberfläche des Substrats.

7. Beschichtungsverfahren nach Anspruch 6, **dadurch gekennzeichnet, dass** ferner eine dritte Zusammensetzung zwischen der ersten Beschichtung und der zweiten Beschichtung aufgebracht wird, um die dritte Beschichtung zu bilden, wobei die erste Beschichtung, die zweite Beschichtung und die dritte Beschichtung eine abziehbare Beschichtung bilden und die Haftfestigkeit zwischen der ersten Beschichtung, der zweiten Beschichtung und der dritten Beschichtung größer ist als die Haftfestigkeit zwischen der ersten Beschichtung und der Oberfläche des Substrats.

8. Beschichtungsverfahren nach Anspruch 6 oder 7, **dadurch gekennzeichnet, dass** es sich bei dem Substrat um Kunststein, Holz, Kunstholz, Marmor, Terrazzo, Keramik, Linoleum, Metall, Kunststoff, Kautschuk, Beton, eine Verbundplatte, Papier, Leder oder Glas und vorzugsweise um Metall oder Glas handelt.

9. Beschichtungsverfahren nach Anspruch 8, **dadurch gekennzeichnet, dass** es sich bei dem Substrat um ein vorbehandeltes Substrat handelt, wobei es sich bei der Vorbehandlung vorzugsweise um Schleifen oder Beschichten handelt.

10. Beschichtungsverfahren nach Anspruch 6 oder 7, **dadurch gekennzeichnet, dass** die Xenonlampen-Alterungszeit der abziehbaren Beschichtung nicht weniger als 200 Stunden, vorzugsweise nicht weniger als 500 Stunden und ganz besonders bevorzugt nicht weniger als 2000 Stunden gemäß Bestimmung nach der ISO-Norm 11341:2004 (GB/T1865-2009) beträgt.

11. Verwendung des Beschichtungssystems nach einem der Ansprüche 1 bis 5 bei der Herstellung eines Produkts.

12. Produkt, umfassend ein Substrat und eine durch Aufbringen eines Beschichtungssystems nach einem der Ansprüche 1 bis 5 auf das Substrat gebildete Beschichtung.

13. Produkt nach Anspruch 12, **dadurch gekennzeichnet, dass** es sich bei dem Produkt um ein Fenster, einen Spiegel, ein Möbelstück, ein Fahrrad, ein Auto, ein Verkehrsschild, eine Brücke, ein Buch oder eine Kiste und vorzugsweise ein Auto handelt.

## Revendications

1. Système de revêtement pelable, comprenant :
une première composition comprenant une dispersion aqueuse de polymère ou un polymère à base de solvant, la première composition étant utilisée pour former un premier revêtement ; et
une deuxième composition qui est une composition de revêtement, la deuxième composition étant utilisée pour former un deuxième revêtement ;
ladite composition de revêtement, comprenant :
un composé contenant un groupe réactif envers un isocyanate, la fonctionnalité de groupe réactif envers un isocyanate du composé contenant un groupe réactif envers un isocyanate n'étant pas inférieure à 2, le composé contenant un groupe réactif envers un isocyanate comprenant un composé contenant amino, le composé contenant amino étant une diamine secondaire aliphatique stériquement encombrée possédant une structure de formule I : 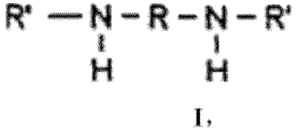
R étant un groupe (cyclo)alkylène possédant 2 à 16 atomes de carbone, et préférablement un groupe (cyclo)alkylène comportant 1 à 3 atomes de carbone qui est substitué par un groupe éthéroxy ou un groupe amino tertiaire ; et R' étant un groupe organique non réactif envers un isocyanate, préférablement l'un ou plusieurs parmi les suivants : diisopropylméthyle et t-butyle ;
un polyisocyanate possédant une fonctionnalité moyenne de groupe isocyanate de pas moins de 2,8, dans lequel dans le cas où le polyisocyanate est un mélange de polyisocyanates, la fonctionnalité de groupe isocyanate du polyisocyanate est la fonctionnalité moyenne de groupe isocyanate de la pluralité de polyisocyanates,
le rapport d'équivalence du groupe isocyanate sur le groupe réactif envers un isocyanate étant de 0,5 : 1 à 10 : 1 ; et
un solvant organique.

2. Système de revêtement selon la revendication 1, comprenant en outre une troisième composition comprenant une dispersion aqueuse de polymère ou un polymère à base de solvant, la troisième composition étant utilisée pour former un troisième revêtement, la troisième composition étant différente de la première composition.

3. Système de revêtement selon la revendication 1, **caractérisé en ce que**, la diamine secondaire aliphatique stériquement encombrée possédant la structure de formule I est un poly(ester aspartique), et préférablement un poly(ester aspartique) possédant une structure de formule II : 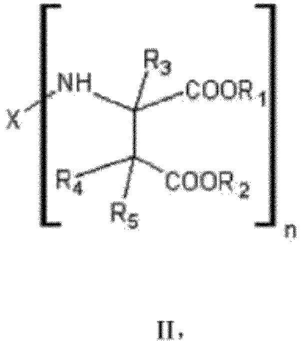
X étant un groupe organique n valent obtenu en éliminant un groupe amino d'une polyamine primaire ou d'une polyéther polyamine, et étant préférablement un groupe hydrocarboné divalent obtenu en éliminant un groupe amino d'une polyamine primaire ou d'une polyéther polyamine ;
R₁ et R₂ étant les mêmes groupes organiques non réactifs envers un isocyanate ou des groupes organiques non réactifs envers un isocyanate différents, et étant chacun indépendamment préférablement méthyle, éthyle ou n-butyle ;
R₃, R₄ et R₅ étant les mêmes groupes hydrogène ou groupes organiques non réactifs envers un isocyanate ou des groupes hydrogène ou des groupes organiques non réactifs envers un isocyanate différents, et étant chacun indépendamment préférablement hydrogène ;
n étant non inférieur à 2, préférablement de 2 à 4, et le plus préférablement 2.

4. Système de revêtement selon la revendication 1, **caractérisé en ce que**, le polyisocyanate possède une fonctionnalité moyenne de groupe isocyanate de pas moins de 2,8 et de pas plus de 10, et le plus préférablement de pas moins de 2,8 et de pas plus de 6.

5. Système de revêtement selon la revendication 1, comprenant en outre un isocyanate possédant une fonctionnalité de groupe isocyanate de moins de 2,8, la fonctionnalité moyenne de groupe isocyanate de l'isocyanate et du polyisocyanate n'étant pas inférieure à 2,8.

6. Procédé de revêtement pour l'application du système de revêtement selon l'une quelconque des revendications 1 à 5, comprenant les étapes de :
application de la première composition sur une surface d'un substrat pour former le premier revêtement ; et
application de la deuxième composition sur une surface du premier revêtement pour former le deuxième revêtement ;
le premier revêtement et le deuxième revêtement formant un revêtement pelable, et la force de liaison entre le premier revêtement et le deuxième revêtement étant plus grande que la force de liaison entre le premier revêtement et la surface du substrat.

7. Procédé de revêtement selon la revendication 6, **caractérisé en ce que**, une troisième composition est en outre appliquée entre le premier revêtement et le deuxième revêtement pour former le troisième revêtement, le premier revêtement, le deuxième revêtement et le troisième revêtement formant un revêtement pelable, et la force de liaison entre le premier revêtement, le deuxième revêtement et le troisième revêtement étant supérieure à la force de liaison entre le premier revêtement et la surface du substrat.

8. Procédé de revêtement selon la revendication 6 ou 7, **caractérisé en ce que**, le substrat est de la pierre artificielle, du bois, du bois artificiel, du marbre, du terrazzo, de la céramique, du linoléum, du métal, du plastique, du caoutchouc, du béton, une feuille composite, du papier, du cuir ou du verre, et est préférablement du métal ou du verre.

9. Procédé de revêtement selon la revendication 8, **caractérisé en ce que**, le substrat est un substrat prétraité, le prétraitement étant préférablement un sablage ou un revêtement.

10. Procédé de revêtement selon la revendication 6 ou 7, **caractérisé en ce que**, le temps de vieillissement à la lampe au xénon du revêtement pelable n'est pas inférieur à 200 heures, préférablement pas inférieur à 500 heures, et le plus préférablement pas inférieur à 2 000 heures, comme déterminé conformément à la norme ISO 11341:2004 (GB/T1865-2009).

11. Utilisation du système de revêtement selon l'une quelconque des revendications 1 à 5 dans la fabrication d'un produit.

12. Produit, comprenant un substrat et un revêtement formé par application d'un système de revêtement selon l'une quelconque des revendications 1 à 5 sur le substrat.

13. Produit selon la revendication 12, **caractérisé en ce que**, le produit est une fenêtre, un miroir, un meuble, une bicyclette, une automobile, un panneau routier, un pont, un livre ou une boîte, et est préférablement une automobile.
